# EUROPEAN PATENT SPECIFICATION

(11) **EP 3 432 092 B1**
(45) Date of publication and mention of the grant of the patent: **20.11.2024**
(21) Application number: 17765879.6
(22) Date of filing: 17.03.2017
(51) Int. Cl.: G05B 15/02, G05B 19/418, F24F 11/30, F24F 130/10

(54) **CONTROL METHOD AND DEVICE FOR SMART HOME**
STEUERUNGSVERFAHREN UND -VORRICHTUNG FÜR SMART-HOME
PROCÉDÉ ET DISPOSITIF DE COMMANDE POUR MAISON INTELLIGENTE

(30) Priority: 17.03.2016 CN 201610156964
(43) Date of publication of application: 23.01.2019
(73) Proprietor: Gree Electric Appliances, Inc. of Zhuhai, Zhuhai, Guangdong 519070 (CN)
(72) Inventor: LI, Yang, Zhuhai, Guangdong 519070 (CN)
(74) Representative: V.O.
(86) International application number: PCT/CN2017/077131
(87) International publication number: WO 2017/157337

(56) References cited:
- WO-A2-2011/100427
- CN-A- 103 032 935
- CN-A- 104 501 371
- CN-A- 104 866 250
- CN-A- 105 020 860
- CN-A- 105 259 828
- CN-A- 105 785 779
- KR-A- 20120 016 739
- US-A1- 2009 149 972
- US-A1- 2012 310 418
- FITZ TEPPER: "Tado?s Smart AC Control Makes Any Air Conditioner Smart", TECHCRUNCH, 2 December 2015 (2015-12-02), XP055515784, Retrieved from the Internet <URL:https://web.archive.org/web/20151202100016/https://techcrunch.com/2015/06/04/tados-smart-ac-control-makes-any-air-conditioner-smart/> [retrieved on 20181016]

## Description

### Technical Field

The present invention relates to the field of smart control, and more particularly to a control method and apparatus for a smart home.

### Background

With the development of technology, the pace of people's life is accelerating, and it is no longer satisfied with the functions of existing applications. Most of the existing weather applications can only display weather-related data, and smart home applications can only achieve simple control. Since the control of smart homes is inseparable from the weather state, people usually need to learn about the latest weather conditions through media or weather applications, and then perform state control on smart homes, which will cause that the weather state information cannot be completely remembered, thus affecting the accuracy of smart home control. Moreover, it is necessary to acquire different information, the operation is complicated, and the control of smart homes is not convenient.

In addition, a patent document with publication number KR20120016739 discloses that the method for controlling the air-conditional in which the invention corresponds to the change of the power rates and which is controlled and such air-conditioner is performed. The invention provides the air-conditioner consisting of the smart control device comprising: the smart control unit which includes the outdoor unit performing air and heat exchange of the outdoor, the indoor unit , and the second operation mode; and selectively performs the first operation mode or the second operation mode based on the comparison result with the first and second power information and predetermined reference value; the indoor unit is installed within the indoor space; and supplies to the cold air, and the air of the hot air or the room temperature within the indoor space; and as to the second operation mode, the amount of power saving is less than those of the first operation mode while controlling the air-conditioner based on the first operation mode and the second power information controlling the air-conditioner based on the second communication unit and the first power information receiving the second power information based on the first communication unit receiving the first power information about the electricity of being supplied in the systematic power, and the use of the amount of available power of the in-home auxiliary power.

A patent document with publication number WO2011/100427A2 discloses a method and apparatus for controlling climate within a building. In one embodiment, the apparatus comprises a smart climate unit for (i) obtaining distributed generator (DG) information pertaining to operation of a DG that generates power for the building, and (ii) controlling at least one climate condition within the building based on at least one of the DG information, local input, or remote input.

A patent document with publication number CN103032935A provides an air-conditioner control terminal which can perform various settings, such as wind direction, wind speed, and the like of an air-conditioner, through simple and visualized operations. The air-conditioner control terminal comprise: a storage part which stores setting information to an air-conditioner body including wind direction and wind speed; a control part which displays an operation object image representing wind blown out from a unit of the air-conditioner body, that is, wind blowing, on a touch screen part, and stores the setting information that includes wind direction and wind speed and is changed by the operation of touching and moving of the operation object image in the storage part; and a communication part which sends the changed setting information to the air-conditioner body.

A patent document with publication number US2012310418A1 provides Controllers for controlling heating, ventilating, air conditioning, and cooling (HVAC) systems. The controllers include graphical user interfaces for user adjustment of system settings. In certain embodiments, the graphical user interfaces may include slide bars for adjusting temperature set points. In certain embodiments, the graphical user interfaces may include selectable calendars for adjusting program schedules for the HVAC systems. In certain embodiments, the graphical user interfaces may include screens for adjusting a nightlight feature of the controller.

In view of the above problem in the conventional art of low control convenience of a smart home, no effective solution has been proposed yet.

### Summary

The embodiment of the present invention provides a control method and apparatus for a smart home, intended to at least solve the technical problem in the conventional art of low control convenience of a smart home.

The object of the invention is achieved by the subject-matter of the independent claims. The dependent claims describe advantageous optional embodiments. The scope of protection of the invention is solely limited by the appended claims.

### Brief Description of the Drawings

The drawings described herein are used to provide a further understanding of the present invention, and constitute a part of the present application. The exemplary embodiments of the present invention and descriptions thereof are used to explain the present invention, and do not constitute improper limitations to the present invention. In the drawing:
Fig. 1 is a flowchart of a control method for a smart home according to an embodiment of the present invention;
Fig. 2 is a schematic diagram of an alternative terminal page adopting a control method for a smart home according to an embodiment of the present invention;
Fig. 3 is a schematic diagram of another alternative terminal page adopting a control method for a smart home according to an embodiment of the present invention;
Fig. 4 is a schematic diagram of yet another alternative terminal page adopting a control method for a smart home according to an embodiment of the present invention; and
Fig. 5 is a schematic diagram of a control apparatus for a smart home according to an embodiment of the present invention.

### Detailed Description of the Embodiments

The following paragraph replaces the last paragraph in the description:
In order to make those skilled in the art better understand the solution of the present invention, the technical solution in the embodiments of the present invention will be clearly and completely described hereinbelow with reference to the drawings in the embodiments of the present invention. It is apparent that the described embodiments are only a part of the embodiments of the present invention, not all of the embodiments. On the basis of the embodiments of the present invention, all other embodiments obtained on the premise of no creative work of those of ordinary skill in the art shall fall within the scope of protection of the present invention.

It is to be noted that the specification and claims of the present invention and terms "first", "second" and the like in the drawings are intended to distinguish similar objects, and do not need to describe a specific sequence or a precedence order. It should be understood that objects used in such a way may be exchanged under appropriate conditions, in order that the embodiments of the present invention described here can be implemented in a sequence except sequences graphically shown or described here. In addition, terms "include" and "have" and any variations thereof are intended to cover non-exclusive inclusions. For example, processes, methods, systems, products or devices containing a series of steps or units do not need to clearly show those steps or units, and may include other inherent steps or units of these processes, methods, products or devices, which are not clearly shown.

According to the embodiment of the present invention, an embodiment of a control method for a smart home is provided. It is to be noted that the steps illustrated in the flowchart of the drawings may be executed in a computer system such as a set of computer executable instructions, and although the logical order is shown in the flowchart, in some cases, the steps shown or described may be performed in an order different from the order herein.

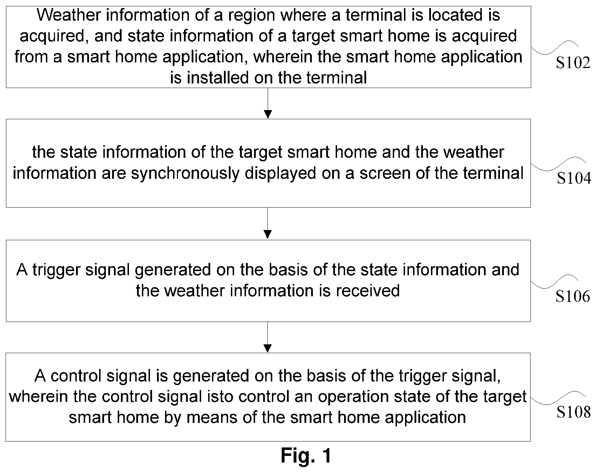

Fig. 1 is a flowchart of a control method for a smart home according to an embodiment of the present invention. As shown in Fig. 1, the control method includes the steps as follows.

At S102, weather information of a region where a terminal is located is acquired, and state information of a target smart home is acquired from a smart home application, wherein the smart home application is installed on the terminal.

At S104, the state information of the target smart home and the weather information are synchronously displayed on a screen of the terminal.

At S 106, a trigger signal generated on the basis of the state information and the weather information is received.

At S108, a control signal is generated on the basis of the trigger signal, wherein the control signal isto control an operation state of the target smart home by means of the smart home application.

By means of the present invention, after acquiring weather information of a region where a terminal is located and acquiring state information of a target smart home from a smart home application, the terminal synchronously displays the acquired state information of the target smart home and the acquired weather information on a screen of the terminal, and when a trigger signal is received, an operation state of the target smart home can be controlled by means of the smart home application. By means of the above embodiment, the terminal synchronously displays the state information of the target smart home and the weather information, and quickly controls the operating state of the target smart home on the same page on the basis of the weather information. Compared with the conventional art where it is necessary to first acquire weather information and then open a smart home application to perform smart home control, the present invention achieves the technical effects of quickly controlling a target smart home and improving the control convenience of a smart home, and solves the technical problem in the conventional art of low control convenience of a smart home.

Specifically, the terminal in the above embodiment is a mobile terminal, such as a mobile phone, a computer, or a remote controller. The smart home may include household devices such as an air conditioner, a dehumidifier, a humidifier, an air purifier, a washing machine, a range hood and so on. The smart home is connected to a smart home application and controlled by the smart home application. The state information of the smart home is used to indicate information such as the turn on and off of the smart home, an operation mode, and the state of various internal components. The state information of the smart home such as the air conditioner may include: information such as operating, a cooling mode, and a current indoor temperature 25°C. The weather information may include weather state information of a region where the terminal is located, such as air quality information, health value information, body temperature, comfort, temperature, humidity, and appropriate values. After receiving a trigger signal of a switch button on the screen of the terminal, the terminal sends a control signal to the smart home application, and control the smart home application to control an operating state of a target smart home bound to the application, and the operating state may include states such as turn on, turn off, and adjustment of an operating mode, an operating speed, voltage and current.

Alternatively, the step of receiving a trigger signal generated on the basis of the state information and the weather information includes: receiving a trigger signal acting on a switch button, wherein switch buttons corresponding to the state information and the weather information are disposed in the screen of the terminal.

The manner of acting on the switch button in the above embodiment may be single click, double click, slide, or the like.

Further alternatively, a preset region in the screen of the terminal includes a switch button for controlling turn on or off of the target smart home, a trigger signal acting on the switch button is received, and a control signal for controlling turn on or off of the target smart home is sent to the smart home application.

In the above embodiment, after the connection between the weather application and the smart home application is established, a page of the weather application (i.e., within the preset region on the screen of the terminal) receives the trigger signal acting on the switch button, and the turn on or off of the target smart home may be controlled through the smart home application. Through the above embodiment, the effect of quickly controlling the smart home can be achieved, and the target smart home can be directly controlled by the weather application without opening the smart home application, thereby increased the convenience of control.

Alternatively, before acquiring state information of a target smart home from a smart home application, the control method further includes: determining the target smart home in a smart home list, wherein multiple smart homes are recorded in the smart home list, and each smart home in the multiple smart homes is associated with the smart home application.

In the above embodiment, the target smart home in the smart home list is first determined, then the state information of the target smart home is acquired from the smart home application, the weather information and the state information of the target smart home are simultaneously displayed on the screen of the terminal, and the smart home is controlled according to the trigger signal. Through the above embodiment, the target smart home in a display state needing to be synchronized is displayed by filtering out the invalid smart home state information, thereby improving the rate of information acquiring and achieving the effect of quickly and accurately acquiring the state information of the target smart home.

In an alternative embodiment, the step of determining the target smart home in a smart home list includes: displaying an application page of a weather application on the screen of the terminal, a synchronous start button being disposed on the application page; if it is detected that the synchronous start button is pressed, generating a synchronous start instruction, the synchronous start instruction being used to acquire the smart home list of the smart home application; and determining the selected target smart home in the smart home list.

In the above embodiment, when an application page of the weather application is displayed on the screen of the terminal, if it is detected that the button on the application page is pressed, the smart home list of the smart home application is acquired, and the target smart home is determined from the list to acquire the state information of the target smart home. Meanwhile, the weather information is acquired, the state information of the target smart home and the weather information are synchronously displayed on the screen, and the operating state of the target smart home is controlled after the control signal is received. Through the above embodiment, the target smart home is determined through the smart home list that can be acquired through a synchronous start button on the weather application page, thereby achieving the effect of simplifying the operation steps of the target smart home.

In an alternative embodiment, the step of determining the target smart home in a smart home list includes: after the weather application is started, acquiring a smart home list of the smart home application; and determining multiple smart homes recorded in the smart home list as the target smart homes.

In the above embodiment, all smart homes bound to the smart home application may be automatically determined as the target smart homes, that is, the function of manually synchronizing devices by a user can be cancelled. The connected devices such as the air conditioner, the dehumidifier, the humidifier and the air purifier in the smart home may be automatically synchronized to the weather module. In the case that the user has multiple devices, the area occupied by the weather module will be relatively large, and the proportion in the weather application will be too large. The convenience brought by the automatic connection to control the smart home will be weakened.

The step of synchronously displaying the state information of the target smart home and the weather information on a screen of the terminal includes: displaying the state information in a first region on the screen of the terminal, and displaying the weather information in a second region on the screen of the terminal.

In the above embodiment, the state information of the target smart home and the weather information are separately and synchronously displayed in the first region and the second region on the screen of the terminal, so as to achieve a comprehensive understanding of the weather information and the operating state of the smart home by a terminal operator.

In the above embodiment, a management button corresponding to the target smart home is also disposed in the first region, and after synchronously displaying the state information of the target smart home and the weather information on a screen of the terminal, the control method further includes: if it is detected that the management button is pressed, jumping to a management binding home page, wherein the management binding home page is provided with a binding management button for modifying a synchronization state of the target smart home, the modification including initiating synchronization or canceling synchronization; and when it is detected that the binding management button is pressed, executing an operation of modifying the synchronization state of the target smart home which indicated by the binding management button.

The first region on the screen of the terminal in the above embodiment can record the state information of the smart home, and can also be provided with a management button corresponding to the target smart home. By pressing the management button, binding management for the synchronization state of the smart home can be realized. That is, the synchronous display of the state information of the target smart home and the weather information may be initiated through the management button, and the synchronous display of the state information of the target smart home and the weather information may be cancelled through the management button. Through the above embodiments, the binding state of the target smart home may be flexibly controlled, and the comfort of user experience can be improved.

Alternatively, the step of receiving a trigger signal generated on the basis of the state information and the weather information includes: when it is detected that the state information of the target smart home is operated, determining that the trigger signal generated in response to the operation is received; and generating a control signal on the basis of the trigger signal includes: entering a device page of the target smart home in response to the trigger signal , wherein the device page is provided with multiple working mode buttons; and generating the control signals corresponding to the working mode buttons when the working mode buttons are triggered.

In the above embodiment, after the state information and the weather information are synchronously displayed on the screen of the terminal, if it is detected that the state information of the target smart home is operated, a device page of the target smart home may be entered, and the working mode of the target smart home is more deeply controlled or adjusted through a working mode button on the device page. Through the above embodiment, a management binding electrical appliance page may be opened by the management button to implement rapid change or cancellation of the binding state of the target smart home, thereby achieving the effect of flexible and efficient management of the target smart home.

The operations of the above embodiment may include single click, double click, pressing, and slide, etc. The above working mode may include various working modes of different smart homes. For example, when the target smart home is an air conditioner, the above working mode may include a cooling mode, a heating mode, a ventilation mode, a dehumidification mode, an automatic mode, and the like. When the target smart home is an air purifier, the above working mode may include an automatic mode, a large air volume mode, a small air volume mode, and the like.

Alternatively, before acquiring weather information of a region where a terminal is located and acquiring the state information of a target smart home from a smart home application, the control method includes: establishing a connection between a weather application and a smart home application, wherein the smart home application is an application program for controlling the target smart home, and the weather application is an application program for detecting and displaying the weather information.

In the above embodiment, the weather application and the smart home application are connected, and the weather information and the operating state of the target smart home are displayed together, thereby achieving the effects of interconnection of two different application programs, information synchronization between the two different applications, and quick connection and operation.

Specifically, a mobile phone (i.e., the terminal mentioned above) is taken as an example. A weather application and a smart home application may be installed on the mobile phone. The weather application is used to detect and display weather information of a city where the mobile phone is located, and the smart home application may control an operating state such as turn on or off of a target smart home. The weather application first establishes a connection with the smart home application. After the connection is established, the weather application page of the mobile phone may synchronously display the weather information and the operating state information of the target smart home, the mobile phone or the user of the mobile phone may control the operating state of the target smart home according to the weather information. The control method is implemented based on a weather application operation page. Specifically, the smart home application connected with the weather application is used to control the target smart home.

Through the above embodiment, the user may quickly turn on or off corresponding home appliances according to the weather information, thereby improving the convenience of the user operation.

Alternatively, the preset region includes a device list of the target smart home, and the step of receiving the trigger signal in the preset region on the screen of the terminal includes: receiving a trigger signal acting on the device list; and the step of sending a control signal to the smart home application includes: sending a control signal for controlling a preset module page in the weather application, wherein the preset module page is a module for controlling the target smart home.

In the above embodiment, when a more complicated operation is required on the target smart home, the preset module page in the weather application (such as a control page of the corresponding target smart home in the smart home application) may be opened by a trigger signal of the device list in the preset region on the screen of the terminal, so as to achieve a more complicated operation on the selected target smart home, thereby achieving the technical effect of more comprehensively and effectively controlling the target smart home.

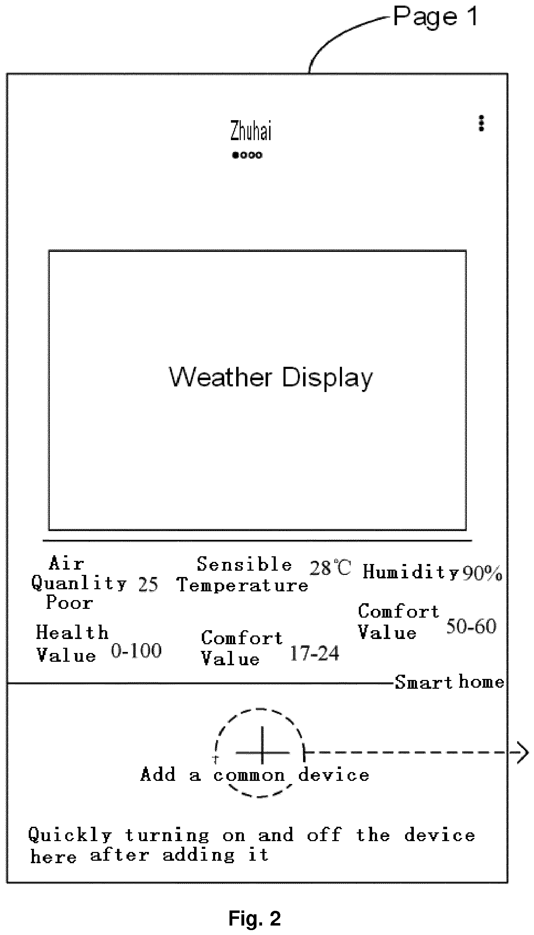

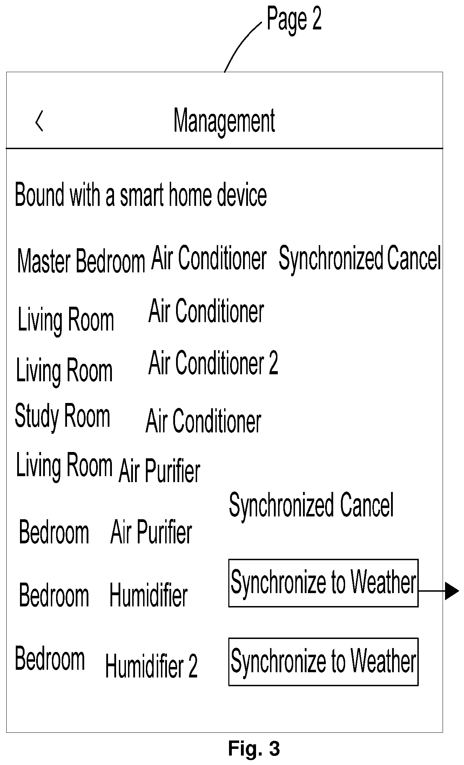

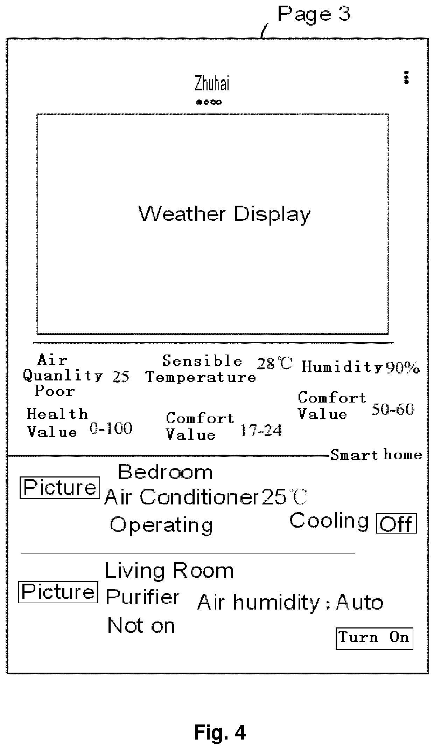

As shown in Fig. 2 to Fig. 4, Page 1 in Fig. 2 is a page where no smart home is added, Page 2 in Fig. 3 is a page for managing and binding a smart home, and Page 3 in Fig. 4 is a page added with a smart home.

Page 1 shown in Fig. 2 is an application page of a weather application. Before the smart home is added, the page of the weather application includes the name of a region where the terminal is located, such as "Zhuhai" in Fig. 2. The following is a "Weather Display" sub-page for displaying weather conditions, including weather conditions such as "Air Quality Poor 125", "Health Value 0-100", "Sensible Temperature 28°C", "Comfort Value 17-24", "Humidity 90%", and "Appropriate value 50-60". The above display region of the weather information about the region and weather conditions is the second region in the above embodiment, and the bottom part is the region of the smart home module, that is, the first region in the above embodiment, for "Add a common device" and "Quickly turn on and off the device here after adding it". The circle with a cross in the middle of Page 1 in Fig. 2 indicates a synchronous start button in the above embodiment. If it is detected that the synchronous start button is pressed, a synchronous start instruction is generated, the synchronous start instruction being used to acquire a smart home list of the smart home application. The smart home list is shown as Page 2 in Fig. 3. The arrow in Fig. 2 indicates a flow direction, that is, after pressing the synchronous start button, Page 1 will jump to Page 2 shown in Fig. 3.

Page 2 of Fig. 3 is a management binding electrical appliance page, which includes a smart home list, and specifically includes a page title "Management" and "Bound with a smart home device". It specifically includes the following devices: "Air Conditioner" located in "Master Bedroom", "Air Conditioner" located in "Living Room", "Air Conditioner 2" located in "Living Room", "Air Conditioner" located in "Study Room", "Air Purifier" located in "Living Room", "Humidifier" located in "Bedroom", and "Humidifier 2" located in "Bedroom". The right side of the line where these devices are located shows the binding state of the device (i.e., smart home) and the smart home application, mainly including "Synchronized", "Cancel" and "Synchronize to Weather". The arrow in Fig. 3 indicates that after operating the "Synchronize to Weather" button, Page 2 will jump to Page 3 as shown in Fig. 4.

Page 3 of Fig. 4 is a page added with a smart home. Page 3 is basically the same as the display of the second region in Page 1, except that the region of the bottommost smart home module in Page 3 (i.e., the first region) changes to: display a smart home picture, a smart home name, a location, an operating mode state, and a button for controlling on and off. For example, the page of the smart home module may include: "Bedroom, Air Conditioner, 25°C, Cooling, Operating" and "Off" button, which indicates that the air conditioner in the bedroom is in a cooling operation with a cooling temperature of 25°C and the air conditioner may be turned off by a corresponding "Off" button. The page of the smart home module may also include "Living Room, Purifier, Wind speed: Automatic, Not On" and "On" button, which indicates that the wind speed of the purifier located in the living room is automatic in the non-on state and the purifier may be controlled to be turned on by the "On" button, wherein the smart home in the page of the smart home module is a device that is bound to the smart home application, as shown in Page 2, that is, the bound target smart home. The first region in Page 3 is also provided with a management button corresponding to the target smart home, such as the "Management" button in Fig. 4. If it is detected that the management button is pressed, it jumps to the management binding home page.

In an alternative embodiment, the module is used for the first time (i.e., the smart home module in the weather application described above): no binding device is displayed, a user may click on a button for adding a device ("Add a Common Device" button in Page 1 of Fig. 2, that is, a synchronous start button) to enter a management binding electrical appliance page (i.e., Page 2), which displays the devices such as an air conditioner, a dehumidifier, a humidifier and an air purifier having been connected to the smart home. Then, the button for synchronizing the device ("Synchronize to Weather" button in Page 2 of Fig. 3) may be selected, thereby being able to synchronize to the weather application.

When using this module again (i.e., the smart home module in the above weather application): it can display a device that the user has bound (such as "Air Conditioner" and "Purifier" in Page 3 of Fig. 4), and display the current state of the device synchronously. The user can quickly switch the device through the "On" and "Off" buttons, and can also click on the device list to quickly enter the smart home page of the device to achieve more complicated operating state adjustment. Or, the user can click on the "Management" text (i.e., the Management button) in Page 3 in Fig. 4 to enter the management binding electrical appliance page to change or cancel the device synchronized to the weather.

Alternatively, the operation of clicking the device list to enter the smart home page of the device may be canceled, and only the button function of quickly turning on and off the device is retained. But users who want to change the device mode need to open the smart home application for further control.

It is to be noted that if the target smart home is in the opening state, device synchronization is cancelled in the management binding electrical application page of the weather application, the device may also keep open, but the information of the device will not be displayed again in the weather application, and the quick operation of turning on and off the device cannot be performed any longer. In the above embodiment, the device may also be switched off or on through the smart home application.

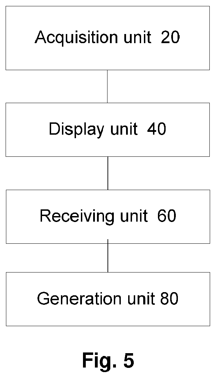

According to another aspect of the embodiment of the present invention, a control apparatus for a smart home is provided. As shown in Fig. 5, the control apparatus includes: an acquisition unit 20, a display unit 40, a receiving unit 60, and a generation unit 80.

The acquisition unit 20 is configured to acquire weather information of a region where a terminal is located, and acquire the state information of a target smart home from a smart home application, the smart home application being installed on the terminal.

The display unit 40 is configured to synchronously display the state information of the target smart home and the weather information on a screen of the terminal.

The receiving unit 60 is configured to receive a trigger signal generated on the basis of the state information and the weather information.

The generation unit 80 is configured to generate a control signal on the basis of the trigger signal, the control signal being used for controlling an operation state of the target smart home by means of the smart home application.

By means of the above embodiment of the present invention, after acquiring weather information of a region where a terminal is located and acquiring the state information of a target smart home from a smart home application, the terminal synchronously displays the acquired state information of the target smart home and the acquired weather information on a screen of the terminal, and when a trigger signal is received, an operation state of the target smart home can be controlled by means of the smart home application. By means of the above embodiment, the terminal may synchronously displays the state information of the target smart home and the weather information, and quickly controls the operating state of the target smart home on the same page on the basis of the weather information. Compared with the conventional art where it is necessary to first acquire weather information and then open a smart home application to perform smart home control, the present invention achieves the technical effects of quickly controlling a target smart home and improving the control convenience of a smart home, and solves the technical problem in the conventional art of low control convenience of a smart home.

Alternatively, the receiving unit 60 includes: a receiving module, configured to receive a trigger signal acting on a switch button, wherein switch buttons corresponding to the state information and the weather information are disposed in the screen of the terminal.

In the above embodiment, after the connection between the weather application and the smart home application is established, a page of the weather application (i.e., within the preset region on the screen of the terminal) receives the trigger signal acting on the switch button, and the turn on or off of the target smart home may be controlled through the smart home application. Through the above embodiment, the effect of quickly controlling the smart home can be achieved, and the target smart home can be directly controlled by the weather application without opening the smart home application, thereby improving the convenience of control.

Alternatively, the control apparatus further includes: a determination unit, configured to determine before acquiring state information of a target smart home from a smart home application, the target smart home in a smart home list, wherein multiple smart homes are recorded in the smart home list, and each smart home in the multiple smart homes is associated with the smart home application.

In the above embodiment, the target smart home in the smart home list is first determined, then the state information of the target smart home is acquired from the smart home application, the weather information and the state information of the target smart home are simultaneously displayed on the screen of the terminal, and the smart home is controlled according to the trigger signal. Through the above embodiment, the target smart home in a display state needing to be synchronized is displayed by filtering out the invalid smart home state information, thereby improving the rate of information acquiring and achieving the effect of quickly and accurately acquiring the state information of the target smart home.

Alternatively, the determination unit includes: a display module, configured to display an application page of a weather application on the screen of the terminal, a synchronous start button being disposed on the application page; an instruction generation module, configured to generate a synchronous start instruction, if it is detected that the synchronous start button is pressed, the synchronous start instruction being used to acquire the smart home list of the smart home application; and a first determination module, configured to determine the selected target smart home in the smart home list.

In the above embodiment, when an application page of the weather application is displayed on the screen of the terminal, if it is detected that the button on the application page is pressed, the smart home list of the smart home application is acquired, and the target smart home is determined from the list to acquire the state information of the target smart home. Meanwhile, the weather information is acquired, the state information of the target smart home and the weather information are synchronously displayed on the screen, and the operating state of the target smart home is controlled after the control signal is received. Through the above embodiment, the smart home list may be acquired through a synchronous start button on the weather application page to determine the target smart home, thereby achieving the effect of simplifying the operation steps of the target smart home.

Alternatively, the determination unit includes: an acquisition module, configured to acquire a smart home list of the smart home application after the weather application is started; and a second determination module, configured to determine multiple smart homes recorded in the smart home list as the target smart home.

In the above embodiment, all smart homes bound to the smart home application may be automatically determined as the target smart home, that is, the function of manually synchronizing devices by a user may be cancelled. The connected devices such as the air conditioner, the dehumidifier, the humidifier and the air purifier in the smart home may be automatically synchronized to the weather module. In the case that the user has multiple devices, the area occupied by the module will be relatively large, and the proportion in the weather application will be too large. The convenience brought by the automatic connection to control the smart home will be weakened.

The display unit 40 includes: an information display module, configured to display the state information in a first region on the screen of the terminal, and display the weather information in a second region on the screen of the terminal.

In the above embodiment, the state information of the target smart home and the weather information are separately and synchronously displayed in the first region and the second region on the screen of the terminal, so as to achieve a comprehensive understanding of the weather information and the operating state of the smart home by a terminal operator.

A management button corresponding to the target smart home is also disposed in the first region, and the control apparatus further includes: a jumping module, configured to jump to a management binding home page if it is detected that the management button is pressed after synchronously displaying the state information of the target smart home and the weather information on a screen of the terminal, wherein the management binding home page is provided with a binding management button for modifying a synchronization state of the target smart home, the modification including initiating synchronization or canceling synchronization; and an execution module, configured to execute an operation of modifying the synchronization state of the target smart home that indicated by the binding management button, when it is detected that the binding management button is pressed, ,.

The first region on the screen of the terminal in the above embodiment can record the state information of the smart home, and can also be provided with a management button corresponding to the target smart home. By pressing the management button, binding management for the synchronization state of the smart home can be realized. That is, the synchronous display of the state information of the target smart home and the weather information may be initiated through the management button, and the synchronous display of the state information of the target smart home and the weather information may be cancelled through the management button. Through the above embodiments, the binding state of the target smart home may be flexibly controlled, and the user experience comfort is improved.

Alternatively, the receiving unit 60 is configured to determine that the trigger signal generated in response to the operation is received, when it is detected that the state information of the target smart home is operated; the generation unit 80 includes: an entry module, configured to enter a device page of the target smart home in response to the trigger signal,, wherein the device page is provided with multiple working mode buttons; and a signal generation module, configured to generate the control signals corresponding to the working mode buttons, when the working mode buttons are triggered.

In the above embodiment, after the state information and the weather information are synchronously displayed on the screen of the terminal, if it is detected that the state information of the target smart home is operated, a device page of the target smart home may be entered, and the working mode of the target smart home is more deeply controlled or adjusted through a working mode button on the device page. Through the above embodiment, a management binding electrical appliance page may be opened by the management button to implement rapid change or cancellation of the binding state of the target smart home, thereby achieving the effect of flexible and efficient management of the target smart home.

In the above embodiment, a user can manually cancel device synchronization between the weather application and the smart home application. The connected devices such as the air conditioner, the dehumidifier, the humidifier and the air purifier in the smart home may be automatically synchronized to the weather module. In the case that the user has multiple devices, the area occupied by the module will be relatively large, and the proportion in the weather application will be too large. The convenience brought by the automatic connection to control the smart home will be weakened.

Through the above embodiment, the weather application is associated with the smart home application, the synchronized smart home is quickly turned on or off through the module in the weather application, and the operating state of the smart home is displayed. The user may quickly turn on or off corresponding home appliances according to the weather information, thereby improving the convenience of the user operation.

The serial numbers of the embodiments of the present invention are only used for descriptions, and do not represent the preference of the embodiments.

In the above embodiments of the present invention, descriptions of each embodiment are emphasized respectively, and parts which are not elaborated in detail in a certain embodiment may refer to relevant descriptions of other embodiments.

In some embodiments provided by the present invention, it will be appreciated that the disclosed technical contents may be implemented in other modes, wherein the apparatus embodiment described above is only schematic. For example, division of the units may be division of logical functions, and there may be additional division modes during actual implementation. For example, a plurality of units or components may be combined or integrated to another system, or some features may be omitted or may be not executed. In addition, displayed or discussed mutual coupling or direct coupling or communication connection may be performed via some interfaces, and indirect coupling or communication connection between units or modules may be in an electrical form or other forms.

The units illustrated as separate parts may be or may not be physically separated. Parts for unit display may be or may not be physical units. That is, the parts may be located at a place or may be distributed on a plurality of units. The aims of the solutions of the embodiments may be achieved by selecting some or all units according to actual requirements.

In addition, all function units in all embodiments of the present invention may be integrated in a processing unit, or each unit may exist separately and physically, or two or more units may be integrated in a unit. The integrated unit may be implemented in a hardware form or may be implemented in a software function unit form.

If being implemented in a form of software function module and sold or used as an independent product, the integrated unit may also be stored in a computer-readable storage medium. Based on such understanding, the essence of the technical solutions of the embodiment of the present invention or parts making contribution to the conventional art may be embodied in a form of software product, and the computer software product is stored in a storage medium, including a plurality of instructions used to enable a computer device (which may be a personal computer, a server, a network device or the like) to execute all or part of the method in each embodiment of the present invention. The foregoing storage medium includes: various media capable of storing program codes such as a U disk, a Read-Only Memory (ROM), a Random Access Memory (RAM), a mobile hard disk, a magnetic disk or an optical disk.

The above is only preferred implementation modes of the present invention, which is defined by the appended claims and limited only by their scope

## Claims

1. A control method for a smart home, **characterized by** comprising:
acquiring weather information of a region where a terminal is located, and acquiring state information of a target smart home from a smart home application installed on the terminal, the terminal is a mobile terminal;
synchronously displaying the state information of the target smart home and the weather information on a screen of the terminal;
receiving a trigger signal generated on the basis of the state information and the weather information; and
generating, according to the trigger signal, a control signal to control an operation state of the target smart home by means of the smart home application,
wherein the state information of the smart home is used to indicate information which includes at least one of the following:
turning on and off of the smart home, an operation mode of the smart home, and states of various internal components of the smart home,
the weather information is weather state information of a region where the terminal is located,
wherein synchronously displaying the state information of the target smart home and the weather information on a screen of the terminal comprises:
displaying the state information in a first region on the screen of the terminal, and displaying the weather information in a second region on the screen of the terminal,
wherein a management button corresponding to the target smart home is also disposed in the first region, and after synchronously displaying the state information of the target smart home and the weather information on a screen of the terminal, the control method further comprises:
if it is detected that the management button is pressed, jumping to a management binding home page, the management binding home page being provided with a binding management button for modifying a synchronization state of the target smart home, the modification comprising initiating synchronization or canceling synchronization; and
when it is detected that the binding management button is pressed, executing an operation, indicated by the binding management button, of modifying the synchronization state of the target smart home,
wherein the synchronous display of the state information of the target smart home and the weather information is initiated through the management button, and the synchronous display of the state information of the target smart home and the weather information is cancelled through the management button,
the initiating synchronization is that the synchronous display of the state information of the target smart home and the weather information is initiated through the management button, and the canceling synchronization is that the synchronous display of the state information of the target smart home and the weather information is cancelled through the management button.

2. The control method as claimed in claim 1, wherein receiving a trigger signal generated on the basis of the state information and the weather information comprises:
receiving a trigger signal which is in response to the action on a switch button, switch buttons corresponding to the state information and the weather information being disposed in the screen of the terminal.

3. The control method as claimed in claim 1, wherein before acquiring the state information of a target smart home from a smart home application, the control method further comprises:
determining the target smart home in a smart home list, a plurality of smart homes being recorded in the smart home list, each smart home in the plurality of smart homes being associated with the smart home application.

4. The control method as claimed in claim 3, wherein determining the target smart home in a smart home list comprises:
displaying an application page of a weather application on the screen of the terminal, a synchronous start button being disposed on the application page;
if it is detected that the synchronous start button is pressed, generating a synchronous start instruction to acquire the smart home list of the smart home application; and
determining the selected target smart home in the smart home list.

5. The control method as claimed in claim 3, wherein determining the target smart home in a smart home list comprises:
acquiring the smart home list of the smart home application after the weather application is started; and
determining a plurality of smart homes recorded in the smart home list as the target smart homes.

6. The control method as claimed in claim 1, wherein
receiving a trigger signal generated on the basis of the state information and the weather information comprises: when it is detected that the state information of the target smart home is operated, determining that the trigger signal generated in response to the operation is received; and
generating a control signal on the basis of the trigger signal comprises:
entering a device page of the target smart home in response to the trigger signal, and the device page being provided with a plurality of working mode buttons; and
when the working mode buttons are triggered, generating the control signals corresponding to the working mode buttons.

7. A control apparatus for a smart home, **characterized by** comprising:
an acquisition unit (20), configured to acquire weather information of a region where a terminal is located, and acquire state information of a target smart home from a smart home application, the smart home application being installed on the terminal, the terminal is a mobile terminal;
a display unit (40), configured to synchronously display the state information of the target smart home and the weather information on a screen of the terminal;
a receiving unit (60), configured to receive a trigger signal generated on the basis of the state information and the weather information; and
a generation unit (80), configured to generate a control signal on the basis of the trigger signal, the control signal to control an operation state of the target smart home by means of the smart home application,
wherein the state information of the smart home is used to indicate information which includes at least one of the following:
turning on and off of the smart home, an operation mode of the smart home, and states of various internal components of the smart home,
the weather information includes weather state information of a region where the terminal is located,
wherein the display unit comprises:
an information display module, configured to display the state information in a first region on the screen of the terminal, and display the weather information in a second region on the screen of the terminal,
wherein a management button corresponding to the target smart home is also disposed in the first region, and the control apparatus further comprises:
a jumping module, configured to jump to a management binding home page if it is detected that the management button is pressed after synchronously displaying the state information of the target smart home and the weather information on a screen of the terminal, the management binding home page being provided with a binding management button for modifying a synchronization state of the target smart home, the modification comprising initiating synchronization or canceling synchronization; and
an execution module, configured to execute an operation of modifying the synchronization state of the target smart home that indicated by the binding management button, when it is detected that the binding management button is pressed,
wherein the synchronous display of the state information of the target smart home and the weather information is initiated through the management button, and the synchronous display of the state information of the target smart home and the weather information is cancelled through the management button,
the initiating synchronization is that the synchronous display of the state information of the target smart home and the weather information is initiated through the management button, and the canceling synchronization is that the synchronous display of the state information of the target smart home and the weather information is cancelled through the management button.

8. The control apparatus as claimed in claim 7, wherein the receiving unit comprises:
a receiving module, configured to receive a trigger signal which is in response to the action on a switch button, switch buttons corresponding to the state information and the weather information being disposed in the screen of the terminal.

9. The control apparatus as claimed in claim 7, further comprising:
a determination unit, configured to determine state information of a target smart home before acquiring, from a smart home application, the target smart home in a smart home list, a plurality of smart homes being recorded in the smart home list, each smart home in the plurality of smart homes being associated with the smart home application.

10. The control apparatus as claimed in claim 9, wherein the determination unit comprises:
a display module, configured to display an application page of a weather application on the screen of the terminal, a synchronous start button being disposed on the application page;
an instruction generation module, configured to generate a synchronous start instruction, if it is detected that the synchronous start button is pressed, , the synchronous start instruction to acquire the smart home list of the smart home application; and
a first determination module, configured to determine the selected target smart home in the smart home list.

11. The control apparatus as claimed in claim 9, wherein the determination unit comprises:
an acquisition module, configured to acquire a smart home list of the smart home application, after the weather application is started; and
a second determination module, configured to determine a plurality of smart homes recorded in the smart home list as the target smart home.

12. The control apparatus as claimed in claim 7, wherein
the receiving unit is configured to determine that the trigger signal generated in response to the operation is received, when it is detected that the state information of the target smart home is operated;
the generation unit comprises:
an entry module, configured to enter a device page of the target smart home, in response to the trigger signal, the device page being provided with a plurality of working mode buttons; and
a signal generation module, configured to generate the control signals corresponding to the working mode buttons, when the working mode buttons are triggered.

## Patentansprüche

1. Steuerungsverfahren für Smart-Home **dadurch gekennzeichnet, dass** es Folgendes umfasst:
Erheben von Wetterinformationen einer Region, in der sich ein Endgerät befindet, und Erheben von Zustandsinformationen eines Ziel-Smart-Homes aus einer Smart-Home-Anwendung, die auf dem Endgerät installiert ist, wobei das Endgerät ein Mobilgerät ist;
synchrones Anzeigen der Zustandsinformationen des Ziel-Smart-Homes und der Wetterinformationen auf einem Bildschirm des Endgeräts;
Empfangen eines Auslösesignals, das auf der Grundlage der Zustandsinformationen und der Wetterinformationen erzeugt wird; und
Erzeugen gemäß dem Auslösesignal eines Steuersignals zum Steuern eines Betriebszustands des Ziel-Smart-Homes mittels der Smart-Home-Anwendung,
wobei die Zustandsinformationen des Smart-Homes verwendet werden, um Informationen anzugeben, die mindestens eine der folgenden beinhalten:
Ein- und Ausschalten des Smart-Homes, eines Betriebsmodus des Smart-Homes und Zustände verschiedener interner Komponenten des Smart-Homes,
wobei die Wetterinformationen Wetterzustandsinformationen eines Gebiets, in dem sich das Endgerät befindet, sind,
wobei das synchrone Anzeigen der Zustandsinformationen des Ziel-Smart-Homes und der Wetterinformationen auf einem Bildschirm des Endgeräts Folgendes umfasst:
Anzeigen der Zustandsinformationen in einem ersten Bereich auf dem Bildschirm des Endgeräts, und Anzeigen der Wetterinformationen in einem zweiten Bereich auf dem Bildschirm des Endgeräts,
wobei eine Verwaltungstaste, die dem Ziel-Smart-Home entspricht, ebenfalls in dem ersten Bereich angeordnet ist, und nach dem synchronen Anzeigen der Zustandsinformationen des Ziel-Smart-Homes und der Wetterinformationen auf einem Bildschirm des Endgeräts, das Steuerungsverfahren Folgendes umfasst:
falls erfasst wird, dass die Verwaltungstaste gedrückt wird, Springen zu einer Verwaltungsbindungs-Homepage, wobei die Verwaltungsbindungs-Homepage mit einer Bindungsverwaltungstaste versehen ist, um einen Synchronisationszustand des Ziel-Smart-Homes zu ändern, wobei die Änderung das Initiieren von Synchronisation oder Annullieren von Synchronisation umfasst; und
wenn erfasst wird, dass die Bindungsverwaltungstaste gedrückt wird, Ausführen einer Operation, die von der Bindungsverwaltungstaste angegeben wird, zum Ändern des Synchronisationszustands des Ziel-Smart-Homes,
wobei die synchrone Anzeige der Zustandsinformationen des Ziel-Smart-Homes und der Wetterinformationen durch die Verwaltungstaste initiiert wird, und die synchrone Anzeige der Zustandsinformationen des Ziel-Smart-Homes und der Wetterinformationen durch die Verwaltungstaste annulliert wird,
wobei das Initiieren der Synchronisation darin besteht, dass die synchrone Anzeige der Zustandsinformationen des Ziel-Smart-Homes und der Wetterbedingungen durch die Verwaltungstaste initiiert wird, und das Annullieren der Synchronisation darin besteht, dass die synchrone Anzeige der Zustandsinformationen des Ziel-Smart-Homes und der Wetterinformationen durch die Verwaltungstaste annulliert wird.

2. Steuerungsverfahren nach Anspruch 1, wobei das Empfangen eines Auslösesignals, das auf der Basis der Zustandsinformationen und der Wetterinformationen erzeugt wird, Folgendes umfasst:
Empfangen eines Auslösesignals als Reaktion auf die Aktion auf einer Umschalttaste, wobei Umschalttasten, die den Zustandsinformationen und den Wetterinformationen entsprechen, in dem Bildschirm des Endgeräts angeordnet sind.

3. Steuerungsverfahren nach Anspruch 1, wobei vor dem Erheben der Zustandsinformationen eines Ziel-Smart-Homes aus einer Smart-Home-Anwendung das Steuerungsverfahren ferner Folgendes umfasst:
Bestimmen des Ziel-Smart-Homes in einer Smart-Home-Liste, wobei eine Vielzahl von Smart-Homes in der Smart-Home-Liste aufgezeichnet ist, wobei jedes Smart-Home in der Vielzahl von Smart-Homes der Smart-Home-Anwendung zugeordnet ist.

4. Steuerungsverfahren nach Anspruch 3, wobei das Bestimmen des Ziel-Smart-Homes in einer Smart-Home-Liste Folgendes umfasst:
Anzeigen einer Anwendungsseite einer Wetteranwendung auf dem Bildschirm des Endgeräts, wobei eine Synchronstarttaste auf der Anwendungsseite angeordnet ist;
falls erfasst wird, dass die Synchronstarttaste gedrückt wird, eine Synchronstartanweisung zum Erheben der Smart-Home-Liste der Smart-Home-Anwendung erzeugt wird; und
das ausgewählte Ziel-Smart-Home in der Smart-Home-Liste bestimmt wird.

5. Steuerungsverfahren nach Anspruch 3, wobei das Bestimmen des Ziel-Smart-Homes in einer Smart-Home-Liste Folgendes umfasst:
Erheben der Smart-Home-Liste der Smart-Home-Anwendung, nachdem die Wetteranwendung gestartet wurde; und
Bestimmen einer Vielzahl von Smart-Homes, die in der Smart-Home-Liste aufgezeichnet sind, als die Ziel-Smart-Homes.

6. Steuerungsverfahren nach Anspruch 1, wobei
das Empfangen eines Auslösesignals, das auf der Grundlage der Zustandsinformationen und der Wetterinformationen erzeugt wird, Folgendes umfasst: wenn erfasst wird, dass die Zustandsinformationen des Ziel-Smart-Homes betätigt werden, Bestimmen, dass das Auslösesignal, das als Reaktion auf den Betrieb erzeugt wird, empfangen wird; und
das Erzeugen eines Steuersignals auf der Grundlage des Auslösesignals Folgendes umfasst:
Eingeben einer Vorrichtungsseite des Ziel-Smart-Homes als Reaktion auf das Auslösesignal, wobei die Vorrichtungsseite mit einer Vielzahl von Arbeitsmodustasten versehen ist; und
wenn die Arbeitsmodustasten ausgelöst werden, Erzeugen der Steuersignale, die den Arbeitsmodustasten entsprechen.

7. Steuergerät für ein Smart-Home, **dadurch gekennzeichnet, dass** es Folgendes umfasst:
eine Erhebungseinheit (20), die dazu konfiguriert ist, Wetterinformationen einer Region, in der sich ein Endgerät befindet, zu erheben, und Zustandsinformationen eines Ziel-Smart-Homes aus einer Smart-Home-Anwendung zu erheben, wobei die Smart-Home-Anwendung auf dem Endgerät installiert ist, wobei das Endgerät ein Mobilgerät ist;
eine Anzeigeeinheit (40), die dazu konfiguriert ist, die Zustandsinformationen des Ziel-Smart-Homes und die Wetterinformationen synchron auf einem Bildschirm des Endgeräts anzuzeigen;
eine Empfangseinheit (60), die dazu konfiguriert ist, ein Auslösesignal zu empfangen, das auf der Grundlage der Zustandsinformationen und der Wetterinformationen erzeugt wird; und
eine Erzeugungseinheit (80), die dazu konfiguriert ist, ein Steuersignal auf der Grundlage des Auslösesignals zu erzeugen, wobei das Steuersignal einen Betriebszustand des Ziel-Smart-Homes mittels der Smart-Home-Anwendung steuern soll,
wobei die Zustandsinformationen des Smart-Homes verwendet werden, um Informationen anzugeben, die mindestens eine der folgenden beinhalten:
Ein- und Ausschalten des Smart-Homes, eines Betriebsmodus des Smart-Homes und Zustände verschiedener interner Komponenten des Smart-Homes,
wobei die Wetterinformationen Wetterzustandsinformationen eines Gebiets, in dem sich das Endgerät befindet, beinhalten;
wobei die Anzeigeeinheit Folgendes umfasst:
ein Informationsanzeigemodul, das dazu konfiguriert ist, die Zustandsinformationen in einem ersten Bereich auf dem Bildschirm des Endgeräts anzuzeigen, und die Wetterinformationen in einem zweiten Bereich auf dem Bildschirm des Endgeräts anzuzeigen,
wobei eine Verwaltungstaste, die dem Ziel-Smart-Home entspricht, ebenfalls in dem ersten Bereich angeordnet ist, und das Steuergerät ferner Folgendes umfasst:
ein Sprungmodul, das dazu konfiguriert ist, zu einer Verwaltungsbindungs-Homepage zu springen, falls erfasst wird, dass die Verwaltungstaste nach dem synchronen Anzeigen der Zustandsinformationen des Ziel-Smart-Homes und der Wetterinformationen auf einem Bildschirm des Endgeräts gedrückt wird, wobei die Verwaltungsbindungs-Homepage mit einer Bindungsverwaltungstaste zum Ändern eine Synchronisationszustands des Ziel-Smart-Homes versehen ist, wobei die Änderung das Initiieren von Synchronisation oder das Annullieren von Synchronisation umfasst; und
ein Ausführungsmodul, das dazu konfiguriert ist, eine Operation des Änderns des Synchronisationszustands des Ziel-Smart-Homes, die von der Bindungsverwaltungstaste angegeben wird, auszuführen, wenn erfasst wird, dass die Verbindungsverwaltungstaste gedrückt wird,
wobei das synchrone Anzeigen der Zustandsinformationen des Ziel-Smart-Homes und der Wetterinformationen durch eine Verwaltungstaste initiiert wird, und
wobei das synchrone Anzeigen der Zustandsinformationen des Ziel-Smart-Homes und der Wetterinformationen durch die Verwaltungstaste annulliert wird,
wobei das Initiieren der Synchronisation darin besteht, dass die synchrone Anzeige der Zustandsinformationen des Ziel-Smart-Homes und der Wetterbedingungen durch die Verwaltungstaste initiiert wird, und das Annullieren der Synchronisation darin besteht, dass die synchrone Anzeige der Zustandsinformationen des Ziel-Smart-Homes und der Wetterinformationen durch die Verwaltungstaste annulliert wird.

8. Steuergerät nach Anspruch 7, wobei die Empfangseinheit Folgendes umfasst:
ein Empfangsmodul, das dazu konfiguriert ist, ein Auslösesignal als Reaktion auf die Aktion auf einer Umschalttaste zu empfangen, wobei Umschalttasten, die den Zustandsinformationen und den Wetterinformationen entsprechen, in dem Bildschirm des Endgeräts angeordnet sind.

9. Steuergerät nach Anspruch 7, das weiter Folgendes umfasst:
eine Bestimmungseinheit, die dazu konfiguriert ist, Zustandsinformationen eines Ziel-Smart-Homes zu bestimmen, bevor aus einer Smart-Home-Anwendung das Ziel-Smart-Home in einer Smart-Home-Liste erhoben wird, wobei eine Vielzahl von Smart-Homes in der Smart-Home-Liste aufgezeichnet ist, wobei jedes Smart-Home in der Vielzahl von Smart-Homes der Smart-Home-Anwendung zugeordnet ist.

10. Steuergerät nach Anspruch 9, wobei die Bestimmungseinheit Folgendes umfasst:
ein Anzeigemodul, das dazu konfiguriert ist, eine Anwendungsseite einer Wetteranwendung auf dem Bildschirm des Endgeräts anzuzeigen, wobei eine Synchronstarttaste auf der Anwendungsseite angeordnet ist;
ein Anweisungserzeugungsmodul, das dazu konfiguriert ist, eine Synchronstartanweisung zu erzeugen, falls erfasst wird, dass die Synchronstarttaste gedrückt wird, wobei die Synchronstartanweisung die Smart-Home-Liste der Smart-Home-Anwendung erheben soll; und
ein erstes Bestimmungsmodul, das dazu konfiguriert ist, das ausgewählte Ziel-Smart-Home in der Smart-Home-Liste zu bestimmen.

11. Steuergerät nach Anspruch 9, wobei die Bestimmungseinheit Folgendes umfasst:
ein Erhebungsmodul, das dazu konfiguriert ist, eine Smart-Home-Liste der Smart-Home-Anwendung zu erheben, nachdem die Wetteranwendung gestartet wurde; und
ein zweites Bestimmungsmodul, das dazu konfiguriert ist, eine Vielzahl von Smart-Homes, die in der Smart-Home-Liste als das Ziel-Smart-Home aufgezeichnet sind, zu bestimmen.

12. Steuergerät nach Anspruch 7, wobei
die Empfangseinheit dazu konfiguriert ist zu bestimmen, dass das Auslösesignal, das als Reaktion auf den Betrieb erzeugt wird, empfangen wird, wenn erfasst wird, dass die Zustandsinformationen des Ziel-Smart-Homes betrieben werden;
wobei die Erzeugungseinheit Folgendes umfasst:
ein Eingabemodul, das dazu konfiguriert ist, eine Vorrichtungsseite des Ziel-Smart-Homes als Reaktion auf das Auslösesignal einzugeben, wobei die Vorrichtungsseite mit einer Vielzahl von Arbeitsmodustasten versehen ist; und
ein Signalerzeugungsmodul, das dazu konfiguriert ist, die Steuersignale, die den Arbeitsmodustasten entsprechen, zu erzeugen, wenn die Arbeitsmodustasten ausgelöst werden.

## Revendications

1. Procédé de commande pour une maison connectée, **caractérisé en ce qu'**il comprend les étapes consistant à :
acquérir des informations météorologiques d'une région où se trouve un terminal, et acquérir des informations d'état d'une maison connectée cible à partir d'une application de maison connectée installée sur le terminal, le terminal étant un terminal mobile ;
afficher de manière synchrone les informations d'état de la maison connectée cible et les informations météorologiques sur un écran du terminal ;
recevoir un signal de déclenchement généré sur la base des informations d'état et des informations météorologiques ; et
générer, en fonction du signal de déclenchement, un signal de commande pour commander un état de fonctionnement de la maison connectée cible par l'intermédiaire de l'application de maison connectée,
dans lequel les informations d'état de la maison connectée sont utilisées pour indiquer des informations qui comprennent au moins l'un des éléments suivants :
une activation et une désactivation de la maison connectée, un mode de fonctionnement de la maison connectée et des états de divers composants internes de la maison connectée,
les informations météorologiques sont des informations d'état météorologique d'une région où le terminal est situé,
dans lequel l'affichage synchrone des informations d'état de la maison connectée cible et des informations météorologiques sur un écran du terminal comprend les étapes consistant à :
afficher les informations d'état dans une première région sur l'écran du terminal, et afficher les informations météorologiques dans une seconde région sur l'écran du terminal,
dans lequel un bouton de gestion correspondant à la maison connectée cible est également disposé dans la première région, et après l'affichage synchrone des informations d'état de la maison connectée cible et des informations météorologiques sur un écran du terminal, le procédé de commande comprend en outre les étapes consistant à :
s'il est détecté que le bouton de gestion est enfoncé, passer à une page d'accueil de liaison de gestion, la page d'accueil de liaison de gestion étant pourvue d'un bouton de gestion de liaison pour modifier un état de synchronisation de la maison connectée cible, la modification comprenant le lancement d'une synchronisation ou l'annulation d'une synchronisation ; et
lorsqu'il est détecté que le bouton de gestion de liaison est enfoncé, exécuter une opération, indiquée par le bouton de gestion de liaison, de modification de l'état de synchronisation de la maison connectée cible,
dans lequel l'affichage synchrone des informations d'état de la maison connectée cible et des informations météorologiques est lancé via le bouton de gestion, et l'affichage synchrone des informations d'état de la maison connectée cible et des informations météorologiques est annulé via le bouton de gestion,
la synchronisation de lancement est que l'affichage synchrone des informations d'état de la maison connectée cible et des informations météorologiques est lancé via le bouton de gestion, et la synchronisation d'annulation est que l'affichage synchrone des informations d'état de la maison connectée cible et des informations météorologiques est annulé via le bouton de gestion.

2. Procédé de commande selon la revendication 1, dans lequel la réception d'un signal de déclenchement généré sur la base des informations d'état et des informations météorologiques comprend l'étape consistant à :
recevoir un signal de déclenchement qui est en réponse à l'action sur un bouton de commutation, des boutons de commutation correspondant aux informations d'état et aux informations météorologiques étant disposés dans l'écran du terminal.

3. Procédé de commande selon la revendication 1, dans lequel avant d'acquérir les informations d'état d'une maison connectée cible à partir d'une application de maison connectée, le procédé de commande comprend en outre l'étape consistant à :
déterminer la maison connectée cible dans une liste de maisons intelligentes, une pluralité de maisons intelligentes étant enregistrées dans la liste de maisons intelligentes, chaque maison connectée de la pluralité de maisons intelligentes étant associée à l'application de maison connectée.

4. Procédé de commande selon la revendication 3, dans lequel la détermination de la maison connectée cible dans une liste de maisons intelligentes comprend les étapes consistant à :
afficher une page d'application d'une application météorologique sur l'écran du terminal, un bouton de démarrage synchrone étant disposé sur la page d'application ;
s'il est détecté que le bouton de démarrage synchrone est enfoncé, générer une instruction de démarrage synchrone pour acquérir la liste de maisons intelligentes de l'application de maison connectée ; et
déterminer la maison connectée cible sélectionnée dans la liste de maisons intelligentes.

5. Procédé de commande selon la revendication 3, dans lequel la détermination de la maison connectée cible dans une liste de maisons intelligentes comprend les étapes consistant à :
acquérir la liste de maisons intelligentes de l'application de maison connectée après le démarrage de l'application météorologique ; et
déterminer une pluralité de maisons intelligentes enregistrées dans la liste de maisons intelligentes en tant que maisons intelligentes cibles.

6. Procédé de commande selon la revendication 1, dans lequel
la réception d'un signal de déclenchement généré sur la base des informations d'état et des informations météorologiques comprend l'étape consistant à : lorsqu'il est détecté que les informations d'état de la maison connectée cible sont exploitées, déterminer que le signal de déclenchement généré en réponse à l'opération est reçu ; et
la génération d'un signal de commande sur la base du signal de déclenchement comprend les étapes consistant à :
entrer dans une page de dispositif de la maison connectée cible en réponse au signal de déclenchement, et la page d'appareil étant pourvue d'une pluralité de boutons de mode de fonctionnement ; et
lorsque les boutons de mode de fonctionnement sont déclenchés, générer les signaux de commande correspondant aux boutons de mode de fonctionnement.

7. Appareil de commande pour une maison connectée, **caractérisé en ce qu'**il comprend :
une unité d'acquisition (20), configurée pour acquérir des informations météorologiques d'une région où un terminal est situé, et acquérir des informations d'état d'une maison connectée cible à partir d'une application de maison connectée, l'application de maison connectée étant installée sur le terminal, le terminal étant un terminal mobile ;
une unité d'affichage (40), configurée pour afficher de manière synchrone les informations d'état de la maison connectée cible et les informations météorologiques sur un écran du terminal ;
une unité de réception (60), configurée pour recevoir un signal de déclenchement généré sur la base des informations d'état et des informations météorologiques ; et
une unité de génération (80), configurée pour générer un signal de commande sur la base du signal de déclenchement, le signal de commande étant destiné à commander un état de fonctionnement de la maison connectée cible au moyen de l'application de maison connectée,
dans lequel les informations d'état de la maison connectée sont utilisées pour indiquer des informations qui comprennent au moins l'un des éléments suivants :
une activation et une désactivation de la maison connectée, un mode de fonctionnement de la maison connectée et des états de divers composants internes de la maison connectée,
les informations météorologiques comprennent des informations d'état météorologique d'une région où le terminal est situé,
dans lequel l'unité d'affichage comprend :
un module d'affichage d'informations, configuré pour afficher les informations d'état dans une première région sur l'écran du terminal, et afficher les informations météorologiques dans une seconde région sur l'écran du terminal,
dans lequel un bouton de gestion correspondant à la maison connectée cible est également disposé dans la première région, et l'appareil de commande comprend en outre :
un module de saut, configuré pour passer à une page d'accueil de liaison de gestion s'il est détecté que le bouton de gestion est enfoncé après l'affichage synchrone des informations d'état de la maison connectée cible et des informations météorologiques sur un écran du terminal, la page d'accueil de liaison de gestion étant pourvue d'un bouton de gestion de liaison pour modifier un état de synchronisation de la maison connectée cible, la modification comprenant le lancement d'une synchronisation ou l'annulation d'une synchronisation ; et
un module d'exécution, configuré pour exécuter une opération de modification de l'état de synchronisation de la maison connectée cible indiqué par le bouton de gestion de liaison, lorsqu'il est détecté que le bouton de gestion de liaison est enfoncé,
dans lequel l'affichage synchrone des informations d'état de la maison connectée cible et des informations météorologiques est lancé via le bouton de gestion, et l'affichage synchrone des informations d'état de la maison connectée cible et des informations météorologiques est annulé via le bouton de gestion,
la synchronisation de lancement est que l'affichage synchrone des informations d'état de la maison connectée cible et des informations météorologiques est lancé via le bouton de gestion, et la synchronisation d'annulation est que l'affichage synchrone des informations d'état de la maison connectée cible et des informations météorologiques est annulé via le bouton de gestion.

8. Appareil de commande selon la revendication 7, dans lequel l'unité de réception comprend :
un module de réception, configuré pour recevoir un signal de déclenchement qui est en réponse à l'action sur un bouton de commutation, des boutons de commutation correspondant aux informations d'état et aux informations météorologiques étant disposés dans l'écran du terminal.

9. Appareil de commande selon la revendication 7, comprenant en outre :
une unité de détermination, configurée pour déterminer des informations d'état d'une maison connectée cible avant d'acquérir, à partir d'une application de maison connectée, la maison connectée cible dans une liste de maisons intelligentes, une pluralité de maisons intelligentes étant enregistrées dans la liste de maisons intelligentes, chaque maison connectée de la pluralité de maisons intelligentes étant associée à l'application de maison connectée.

10. Appareil de commande selon la revendication 9, dans lequel l'unité de détermination comprend :
un module d'affichage, configuré pour afficher une page d'application d'une application météorologique sur l'écran du terminal, un bouton de démarrage synchrone étant disposé sur la page d'application ;
un module de génération d'instruction, configuré pour générer une instruction de démarrage synchrone, s'il est détecté que le bouton de démarrage synchrone est enfoncé, l'instruction de démarrage synchrone étant destinée à acquérir la liste de maisons intelligentes de l'application de maison connectée ; et
un premier module de détermination, configuré pour déterminer la maison connectée cible sélectionnée dans la liste de maisons intelligentes.

11. Appareil de commande selon la revendication 9, dans lequel l'unité de détermination comprend :
un module d'acquisition, configuré pour acquérir une liste de maisons intelligentes de l'application de maison connectée, après le démarrage de l'application météorologique ; et
un second module de détermination, configuré pour déterminer une pluralité de maisons intelligentes enregistrées dans la liste de maisons intelligentes en tant que maison connectée cible.

12. Appareil de commande selon la revendication 7, dans lequel
l'unité de réception est configurée pour déterminer que le signal de déclenchement généré en réponse à l'opération est reçu, lorsqu'il est détecté que les informations d'état de la maison connectée cible sont exploitées ;
l'unité de génération comprend :
un module d'entrée, configuré pour entrer dans une page de dispositif de la maison connectée cible, en réponse au signal de déclenchement, la page de dispositif étant pourvue d'une pluralité de boutons de mode de fonctionnement ; et
un module de génération de signaux, configuré pour générer les signaux de commande correspondant aux boutons de mode de fonctionnement, lorsque les boutons de mode de fonctionnement sont déclenchés.
